Europäisches Patentamt

European Patent Office

Office européen des brevets

(11) Publication number: **0 104 545**
A2

# EUROPEAN PATENT APPLICATION

(21) Application number: **83109090.7**

(22) Date of filing: **14.09.83**

(51) Int. Cl.³: **G 06 F 3/04**

(30) Priority: 27.09.82 JP 166581/82
27.09.82 JP 166582/82

(43) Date of publication of application:
04.04.84 Bulletin 84/14

(84) Designated Contracting States:
DE FR GB IT

(71) Applicant: **TOKYO SHIBAURA DENKI KABUSHIKI KAISHA**
72, Horikawa-cho Saiwai-ku
Kawasaki-shi Kanagawa-ken 210(JP)

(72) Inventor: **Ishii, Takatoshi**
3-23-6, Imai
Oome-shi Tokyo(JP)

(74) Representative: **Patentanwälte Henkel, Pfenning, Feiler, Hänzel & Meinig**
Möhlstrasse 37
D-8000 München 80(DE)

(54) Input and output port control unit.

(57) An input and output port control unit which is adapted to a microcomputer system including an interrupt request line (19), address/control bus (15) and data bus (17), a plurality of extension boards (13i), each board (13i) including an I/O logic circuit (23) for producing an interrupt request signal. The interrupt request signal is transferred to the microcomputer system through an interrupt request flip-flop (27), NAND gate (35) and a common interrupt request line (19). The microcomputer, in response to the interrupt request signal outputs a common port address to those extension boards (13i) through an address/control bus (15). The common port address is decoded by a decoder (25). The output signal from the decoder (25) and the interrupt request signal form an interrupt request identifying signal with a flip-flop (29) and NAND gates (31, 33). The interrupt request identifying signal is transferred through a predetermined bit line of a data bus (17) to the microcomputer system.

FIG. 3

EP 0 104 545 A2

- 1 -

## Input and output port control unit

The present invention relates to an input and output port control unit adapted to a microcomputer system.

In a system using a microcomputer, the number of interrupt lines which enable interrupt signals to be input directly to the microcomputer is extremely limited. This limitation is due to the number of the input and output signals (the number of input and output pins). In the prior art system, an interrupt controller LSI chip is used to respond to increases in interrupt requests. However, this method has a drawback in that extra control lines are required when an extension unit is externally connected. To be compatible with other systems, the increase of interrupt requests may be handled by an extension common bus of the external extension unit under daisy chain control, an interrupt level control for the individual level, and an interrupt control for each option slot etc. However, in any case the above unit and controls require separate control lines and logics, respectively.

Furthermore, a personal computer system having a microprocessor as a central processing unit has the capability of being connected to the expansion interface and extending various types of input and output interfaces.

Consequently, as microcomputers are widely distributed in the marketplace, types of input and output units tend to increase. However, addresses specified at the microprocessor and address modification functions for the input and output port are not fully provided. Consequently, unique input and output port addresses are appropriately assigned to different input and output interfaces. However, the maximum number of input and output ports (I/O ports) are limited depending on the type of microprocessors. Thus, the increase of the I/O units causes a shortage of I/O ports available to be assigned. Normally, the I/O ports should be assigned with one or more I/O units.

An object of the invention is to provide an input and output control unit which enables a number of interrupt requests from an extension I/O board on an extension common bus having fewer (for example one) interrupt request lines and which feasibly distinguish the interrupt requests.

A further object of the present invention is to provide an input and output port control unit in which interrupt request discriminating bits are defined logically independent of the mounted slots of the extension I/O board.

A further object of the present invention is to provide an input and output port control unit which can determine the mount conditions of the extension board.

Yet a further object of the invention is to provide an input and output port control unit in which a common I/O port is assigned to the respective input and output units, a page select concept is introduced, and the effective number of I/O ports is expanded.

Still a further object of the invention is to provide an input and output port control unit which enables multiplexed page selection and multiplexed operation by defining common assignment between multiplexed I/O ports.

To achieve the above object of the present invention, an input and output port control unit adapted to a microcomputer system is provided which includes an interrupt request line, address/control bus, data bus, a plurality of extension boards, each board comprising interface means which interfaces with said microcomputer system, first transfer means for transferring through the interrupt request line an interrupt request signal from said interface means to said microcomputer system, means for producing via the address control bus a port address which is common for all the extension boards from said microcomputer system, a decoder for decoding the common port address, and second transfer means for transferring an interrupt request identifying signal derived from the output signal of said decoder and the interrupt request signal to said microcomputer system through a specified bit of the data bus assigned to said input and output port control unit.

According to the present invention, a plurality of external extension I/O boards can be connected to a common extension bus having fewer interrupt request lines. Since the interrupt request identifying information (ID bits) can be transferred using a data bus, the number of interrupt requests can be increased without increasing the bus width. A priority circuit for determining the priorities of a plurality of interrupt requests is not required. The interrupt request identifying bits can be set logically and read independently of the mounted slot position of the external extension I/O boards. Furthermore, the types of external extension I/O boards connected to the extention common bus can be easily identified.

Other objects and features of the present invention will be apparent from the following descriptions of the accompanying drawings summarized below:

Fig. 1 is a block diagram showing the construction of a personal computer system to which the present invention is applied;

Fig. 2 shows a port address map of an I/O port in an embodiment of the present invention;

Fig. 3 is a block diagram showing an embodiment of an extension board (external I/O board) of the present invention;

Figs. 4A and 4B show port assignment maps with Fig. 4A showing a port assignment map in read ID port (read RDID) and Fig. 4B showing a set ID port (STID);

Fig. 5 is a conceptional block diagram showing an input and output page selecting circuit in another embodiment of the present invention;

Fig. 6 shows a bit definition of an input and output port in the input and output page selecting circuit in Fig. 5; and

Fig. 7 is a conceptional diagram showing the improved input and output port map used in this invention.

Now an embodiment of the present invention will be described in detail, referring to the drawings.

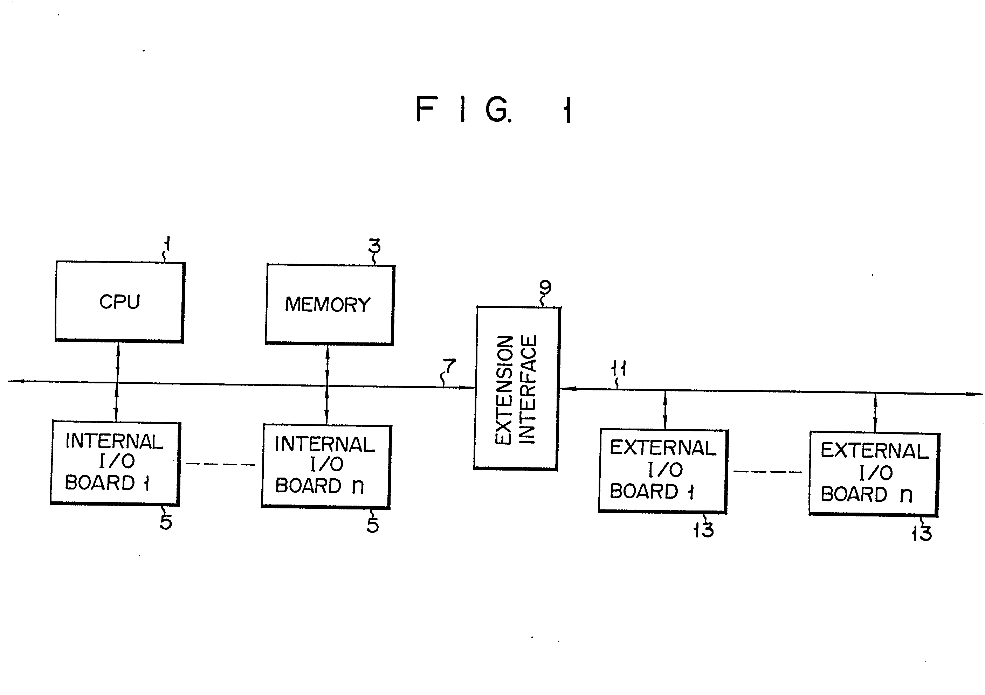

Fig. 1 is a block diagram showing the type of personal microcomputer system to which the present invention could be applied. The personal computer comprises a microcomputer 1 (hereinafter referred to as CPU), a memory 3 and a plurality of internal input and output units (1 ... n) (I/O units) 5, which are connected to a common bus 7. The personal computer can connect an external extension unit through an extension interface 9 and external extension common bus 11 (hereinafter referred to as extension bus) so that a plurality of extension boards, i.e. external I/O (1 ... m) units 13, can be extended.

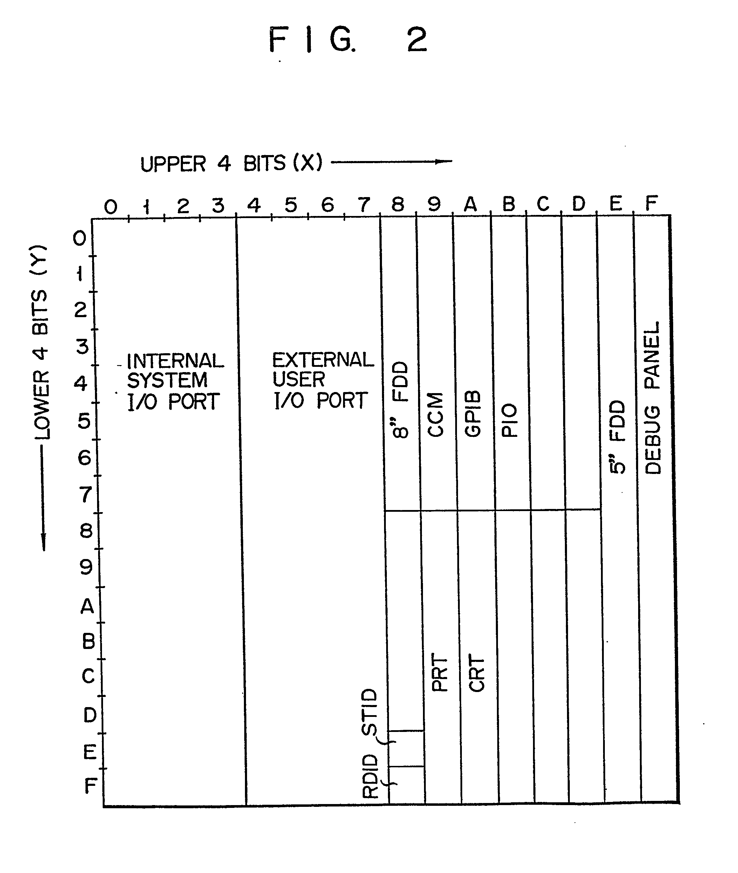

Fig. 2 shows an I/O port map which is applied to the microcomputer system shown in Fig. 1. In the map, an 8-bit port address is expressed in the form of $XY_H$ (H: hexadecimal). The X (upper 4 bits) and Y (lower 4 bits) are arranged in abscissa and ordinate, respectively. Consequently, 256 ports can be defined as a whole. The I/O ports for the I/O units 5 in the microcomputer system are assigned addresses $00_{(hex)}$ through $3F_{(hex)}$. An optional board to expand the system with, for example, debug panels is assigned the port addresses $F0_{(hex)}$ through $FF_{(hex)}$. An I/O device other than the extension unit, such as a 5" floppy disk device is assigned the port addresses $E0_{(hex)}$ to $EF_{(hex)}$. Further, the port addresses of $88_{(hex)}$ through $8F_{(hex)}$ are provided for the input and output port control unit of the present invention. Each time a manufacturer develops new I/O extension board, the new board can be assigned empty port addresses not already specified. Thus, port addresses are given in the respective internal and external ports. Consequently, during the execution of an input or output instruction by the CPU1, the specified port address is supplied through the common bus 7 and the external extension common bus 11 to the external I/O board 13. Thus, the output of a decoder provided in the I/O board 13 renders a specified port active.

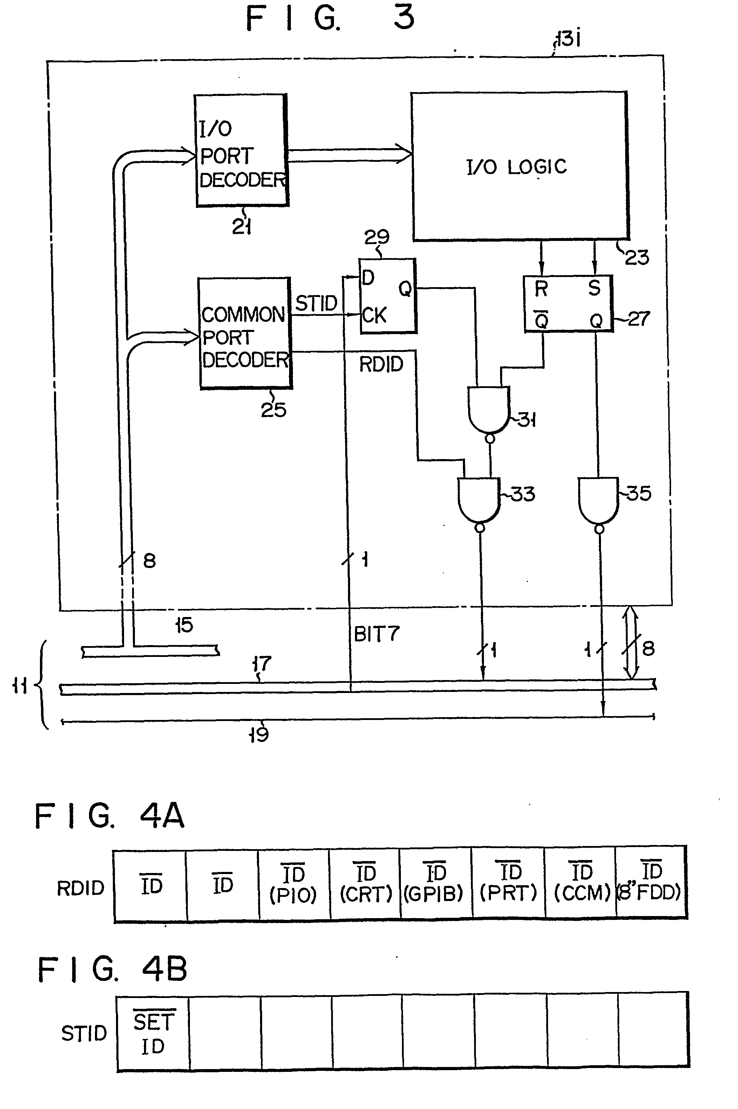

Suppose that the respective extension boards for an eight-inch floppy disk drive (8"FDD), a communication control module (CCM), a general purpose interface bus (GPIB), a process I/O (PIO), a printer (PRT) and a CRT display, etc. are connected to the external extension common bus 11 as the external I/O boards 13. The respective port addresses for the above extension boards are shown in Fig. 2. The connections between the external extension common bus 11 and the external I/O boards 13 are shown in Fig. 3.

In Fig. 3, the external extension common bus 15 comprises an address/control bus 15, a data bus 17, and a single common interrupt request line 19. The external I/O board 13 is provided with an I/O port decoder 21, an I/O logic 23, a common port decoder 25, an RS flip-flop 27 (F/F) indicating an interrupt request, a D type flip-flop 29 (F/F), and output gates 31, 33, 35. The external I/O boards 13 constructed as described above are registered in order of development. However, the port address and ID bits (to be described later) can be uniquely assigned independent of the examples in Fig. 2 and Fig. 4A.

When the external user I/O ports are extended, the personal computer recognizes their existence and interrupts requests. Consequently, the port address and the ID bits must not be dependent on the order in which the user purchases the I/O units or the slot positions of the external I/O boards. Otherwise, software processing by the microcomputer is extremely difficult.

In this embodiment, it is assumed that the port addresses of the external I/O boards 16 connected to the external extension common bus 15 are assigned as shown in the right side of the I/O port map. Further, the ports for controlling the external extension I/O boards are supposed to be assigned the port address $8F_{(hex)}$ and $8E_{(hex)}$. When the CPU1 reads the values of the output gate 33 of the respective external extension I/O boards 13, a port RDID is used. The ID bits can arbitrary be set in the RDID corresponding to the external extension I/O boards. For example, the 8"FDD is assigned in the ID bit 0, the CCD in ID bit 1 and the PRT in ID bit 2 and so on. These ID bits function as identification data for the external extension I/O boards 13 and correspond to bit positions on the data bus 15. The external extension I/Os are simply assigned in bits 0 through 7 in the order of their appearance on the market.

Now an operation of the embodiment will be described where the external extension I/O board 16i functions for the printer (PRT). It is clear from Fig. 2 that the I/O port addresses $98_{(hex)}$ through $9F_{(hex)}$ are supplied through the address/control bus 15 from the CPU1 to the I/O port decoder 21 for the information input and output control of PRT by the CPU1 (ex. status read or set).

Then, the decoded output is supplied to the I/O logic 23. Now suppose that an interrupt request signal is generated from the I/O logic 23 while the I/O logic 23 is being controlled by the output signal from the decoder 21. Consequently, the interrupt request signal sets the interrupt request FF27. Then, the output from the FF27 is transferred through the output gate 35, interrupt request line 19, and extension interface 9 to the CPU1. It should be noted that in this embodiment the extension bus 11 is active low. The CPU1 executes an interrupt processing routine to identify which external I/O boards 13i, produced the interrupt request. The CPU1, then executes the instruction, IN $8F_{(hex)}$, so that the CPU1 reads the data of RDID port into its accumulator. In the execution of that instruction the CPU1 outputs the RDID port address $8F_{(hex)}$ onto the address/control bus 15 through the extension interface 9. All the external I/O boards 13 connected to the external extension bus 11 receive the port address $8F_{(hex)}$ at their respective port decoders 25 and produce the decoded signals RDIDs to the respective output gates 33. At this time, the output gates of other external I/O boards, except the I/O board 13i assigned for the PRT, are all logic "0". In other words, the reset outputs of the respective interrupt request F/F 27 are logic "1".

On the other hand, since the reset output of the interrupt request FF 27 in the PRT board 13i is logic "0", the output signal of the output gate 31 becomes logic "1". Consequently, the output signal of the output gate 33, that is the ID bit signal, becomes logic "0". The output signals from the respective output gates 33 of other external I/O boards 13i except for the PRT board 13i are logic "1" also. The ID bit signal is supplied to the predetermined bit position as shown in Fig. 4A. Thus, in the case of the PRT board 13i, the bit 2 of the data bus 17 becomes active (logic "0"). The respective ID bit signals of the external extension I/O boards outputted onto the data bus 17 are transferred to the CPU1 as one byte.

Thus, the CPU1 identifies the active bits on the data bus from the read out data and determines which external extension I/O boards 13 produced the interrupt request signal. In this embodiment, the external extension I/O board is identified as 13i.

On the other hand, suppose that the interrupt requests are generated simultaneously from a plurality of external extension I/O boards 13. In this case, the reception of the interrupt requests by the CPU1 and the readings of the ID bit signal by the interrupt processing routine are performed in the same manner as described above. However, in this case, the CPU1 simultaneously reads all the ID bit signals of the external I/O boards that produce interrupt requests. For example, when the PRT board and the CRT board simultaneously generate the interrupt signals, the CPU1 reads the active bits 2 and 4. The interrput processing routine processes the active bits in a priority manner (In the simplest way in the order of ID bit 0 to ID bit 7). The interrupt request FF27 is reset in accordance with a control signal produced from the I/O port decoder 21 at the final step of the interrupt processing routine. Therefore, the present invention eliminates the priority determination circuit. Further, since the ID bits are given in relation to the type of the external extension I/O boards, the ID bits can be read independently of the spot, position and slot of the boards.

How the CPU1 identifies a type of external I/O boards connected to the external extension common bus 15 will now be described. The identifying flip-flop (IDFF) 29 is provided in each I/O board 13. The port address for the IDFF29 is set in $8E_{(hex)}$ of the I/O port map in Fig. 2. Since the port addresses for the IDFF29 are common for all the external extension I/O boards 13, the respective IDFF can be defined as port STID in the set ID register STID in Fig. 4B.

The identification of the external extension I/O boards 13 connected to the extension bus 11 occurs immediately after the system is powered. In this case, in the initialize routine, the CPU1 executes the data output instruction OUT $8E_{(hex)}$, $0_{(hex)}$ so that CPU1 outputs the port address $8E_{(hex)}$ onto the address/control bus 15 and sets all the data bit on the data bus 17 to logic "0". It is so constructed that bit 7 from the data bus 17 is supplied to the respective IDFF29 in the respective external extension I/O boards 13. Therefore, the decoded outputs STID are produced from the respective port decoders 25 in the respective I/O boards 13 to reset the respective IDFF29. In this condition, CPU1 executes the data read instruction (IN $8F_{(hex)}$) to read the data of RDID port $8F_{(hex)}$. The port address $8F_{(hex)}$ from the CPU1 is output to the address/control bus 15. Consequently, the decoded signal RDID (logic "1") from the respective port decoder 25 in the respective I/O boards 13 is produced.

On the other hand, when the respective IDFF29 in the respective I/O boards 13 are in reset condition, the output of the respective output gates is logic "1". The ID bit signals of logic "0" from the respective output gates 33 render the corresponding bits of the data bus 17 active. The ID bit signals produced from the I/O boards to the data bus 17 are read simultaneously by the CPU1 as in the case of simultaneous interrupt request processing. Identifying the active low bits of the read out data, the CPU1 acknowledges the construction of the external I/O boards mounted as shown in Fig. 4A. Then, the CPU1 sets all the bits on the data bus 17 to logic "1" and resets the respective IDFF 29.

In the above embodiment, separate port addresses are used for the RDID port and STID port. A single port address can be used since the read operation and the write operation are not overlapped. Furthermore, by increasing the effective bits of the STID port and providing the RDID port and port addresses corresponding to the increase, eight extension I/O boards can be added for every one increased bit. When a plurality of I/O boards of a single type are required, a plurality of channels' signal type I/O devices can be assigned in a single ID bit. Otherwise, the respective I/O devices must be assigned in the respective ID bits. Each time the manufacturer develops a new I/O unit, appropriate I/O port address should be assigned. Normally, four or eight I/O ports should be assigned for each I/O unit. The number of the I/O units to be developed will predictably be large, this is particularly true when the I/O units are used between a microcomputer and a large computer.

In another embodiment of the present invention, the I/O units developed by a manufacturer are considered I/O pages. These I/O pages are assigned to a common I/O port that is multiplexed. An I/O page selecting circuit for selecting the multiplexed I/O pages is provided.

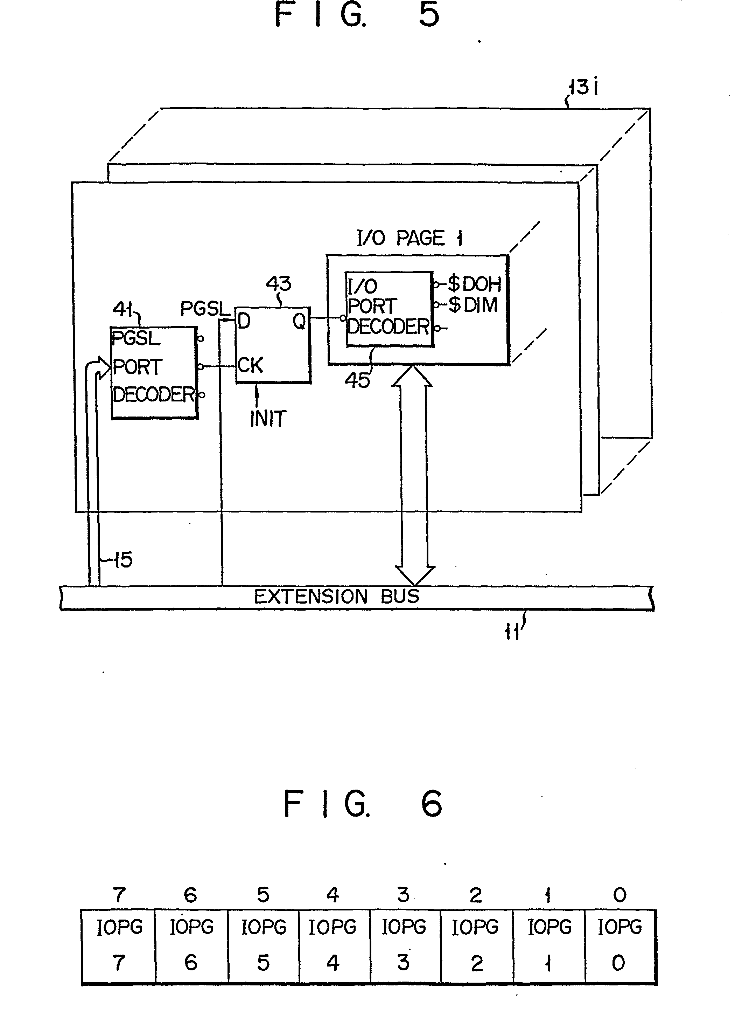

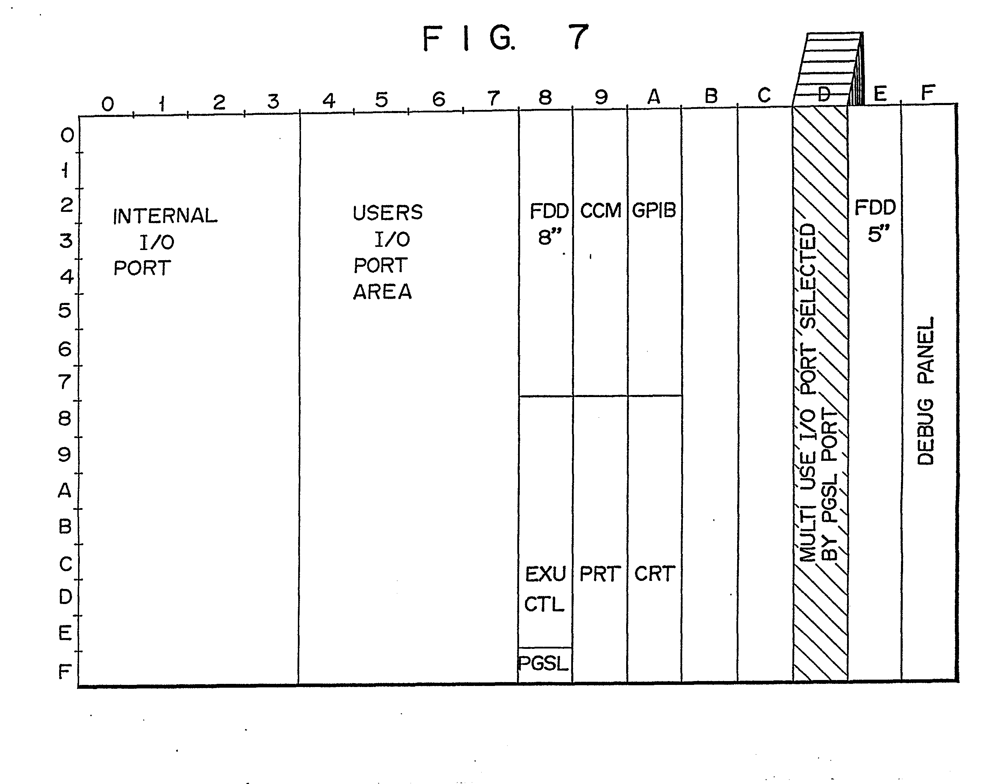

Fig. 5 shows an embodiment of the I/O page selecting circuit, Fig. 6 shows the bit assignment of the I/O port and Fig. 7 shows an improved I/O port map of the invention. The symbols in Fig. 3 are used to designate the same parts in Fig. 5. Each external extension I/O board 13 has a page select port decoder 41.

The address from the CPU1 is supplied through the external extension common bus 11 to the page select port decoder 41. The page select port decoder 41 detects the address of the hatched area (multi use I/O port) of the I/O port map in Fig. 7. The decoder 41 is common to all the external I/O boards 13. The signal detected by the decoder 41 is supplied to a clock input terminal CK of the flip-flop 43. A corresponding one bit data of the port address is supplied to the D input terminal of the flip-flop 43. The Q output (PGSI) of the flip-flop 43 is supplied to an enable terminal of the I/O port decoder 45. Like the page select port decoder 41 the I/O port decoder 45 is common to all the external I/O boards 13.

Fig. 6 shows the I/O port (a PGSL port) assigned to a unit which is mounted on a plurality of I/O boards (called an extension unit). The PGSL port is assigned to the address "8F"$_{(hex)}$ of an extension control area (EXU CTL) of the map shown in Fig. 7. When selecting the I/O page, the CPU1 sets the corresponding data bit to "0" in accordance with the PGSL port in Fig. 6. Then, execution of an OUT instruction causes the page select port decoder 41 to produce the PGSL signal. Consequently, any one of the bits in Fig. 6 can be loaded in the page select 1-bit F/F 43. The output signal PGSL from the F/F 43 is "0" as the data bit i corresponding to the I/O page being selected by the CPU1 is set to "0". Therefore, the I/O port decoder 45 is enabled as it is active low.

The I/O port decoder 45 is also common to all the I/O pages (DO through DF). Therefore, the area of DO through DF is defined in a multiplexed manner and is page selected by the PGSL port decoder 41.

When a single external I/O board 13 is used, the I/O board 13 is automatically selected without consideration of the selecting operation through use of the initialize signal as the selection signal, which is produced by the CPU1 when the system is powered. By commonly defining the parts of D0 through DF among the I/O units, multi page selection and multi operation are enabled when common processings such as an initialize routine are required.

In the embodiment described above, a single PGSL port is used. However, second and third PGSL ports (PG15, PG25, PG35) may be provided and specified by an extended I/O port so that the I/O units can be extended as much as required. Further, in the embodiment the respective I/O units correspond to the individual bits of the PGSL port. However, the respective I/O units may correspond to an encoded binary. In that case, actually 256 ports can be defined with 8 bits. Further, the embodiment the present invention is illustratively applied to the personnel computer system. However, the extension of the I/O port may be applied to the entire computer system.

**0104545**

Claims:

1. An input and output port control unit adapted to a computer system including an interrupt request line (19), address/control bus (15) and data bus (17), including a plurality of extension boards (13i), each board (13i) comprising:

interface means (23) which interfaces with said computer system;

first transfer means (27, 35, 19) for transferring through the interrupt request line an interrupt request signal from said interface means to said computer system;

means for producing through the address control bus a port address which is common for all the extension boards from said computer system;

decoding means (25) for decoding the common port address; and

second transfer means (31, 33, 17) for transferring an interrupt-request-identifying signal driven from the output signal of said decoder and the interrupt request signal to said computer system through a specified bit of the data bus assigned to said input and output control unit.

2. An input and output port control unit according to claim 1, characterized in that said computer system includes a discriminating means (RDID) for discriminating said extension board which has produced the interrupt request signal by discriminating the active bits of the interrupt-request-identifying signal transferred through the data bus (17).

3. An input and output port control unit according to claim 1, characterized in that when the interrupt request signals are produced simultaneously from a plurality of extension boards, said computer system identifies the plurality of active bits of the interrupt request identifying signal in a priority order set by a program.

4. An input and output control unit adapted to a computer system including an interrupt request line, address/control bus and data bus, including a plurality of extension boards, each board comprising:

means (10) for producing first and second port addresses which are common to the extension boards through the address/control bus;

decoding means (16) for decoding the first and second port addresses;

latch means (165) which is set by a decoded signal of the first port address from said decoding means and is reset by a signal through a specified bit of the data bus from said computer system;

output gate means (166, 167) which receives an output signal from said latch means and an output signal of the second port address from said decoder; and

transferring means (151) for transferring an output signal from said output gate means to said computer system through the specified bit of the data bus assigned to the extension board as a mounting identifying signal.

5. An input and output control unit in a computer system in which input and output units connected to said system are defined as pages (input and output pages), an input and output port is commonly assigned to the pages to extend the input and output port wherein said respective page is provided with input and output page selecting means (34, 35, 36).

6. An input and output control unit according to claim 5, wherein said input and output page selecting means comprises:

a first decoder (34) for decoding an address specified by a processor unit;

an input and output page selecting circuit (35) in which data for the page selection is set for each the input and output page and the selected data is loaded in accordance with the output of the first decoder; and

a second decoder (36), enabled by the output from said input and output page selecting circuit for decoding the common input and output port within the specified input and output page.

# F I G. 1

# F I G. 2

# F I G. 3

# F I G. 4A

| RDID | $\overline{ID}$ | $\overline{ID}$ | $\overline{ID}$ (PIO) | $\overline{ID}$ (CRT) | $\overline{ID}$ (GPIB) | $\overline{ID}$ (PRT) | $\overline{ID}$ (CCM) | $\overline{ID}$ (8"FDD) |
|---|---|---|---|---|---|---|---|---|

# F I G. 4B

| STID | $\overline{SET}$ ID | | | | | | | |
|---|---|---|---|---|---|---|---|---|

415

# F I G. 5

0104545

# F I G. 6

| 7 | 6 | 5 | 4 | 3 | 2 | 1 | 0 |
|---|---|---|---|---|---|---|---|
| IOPG 7 | IOPG 6 | IOPG 5 | IOPG 4 | IOPG 3 | IOPG 2 | IOPG 1 | IOPG 0 |

# F I G. 7

| | 0 | 1 | 2 | 3 | 4 | 5 | 6 | 7 | 8 | 9 | A | B | C | D | E | F |

INTERNAL I/O PORT

USERS I/O PORT AREA

FDD 8"  CCM  GPIB

EXU CTL  PRT  CRT

PGSL

MULTI USE I/O PORT SELECTED BY PGSL PORT

FDD 5"

DEBUG PANEL

0104545